# FASCICULE DE BREVET EUROPEEN

(11) **EP 3 807 546 B1**
(45) Date de publication et mention de la délivrance du brevet: **27.07.2022**
(21) Numéro de dépôt: 19746112.2
(22) Date de dépôt: 03.06.2019
(51) Int. Cl.: F16B 37/04, F16B 1/00

(54) **DISPOSITIF DE FIXATION COMPORTANT UN BORD DE PANNEAU CONFORME POUR LA RÉCEPTION D'UNE PINCE A ÉCROU ET UNE PINCE A ÉCROU**
BEFESTIGUNGSVORRICHTUNG MIT EINER PLATTENKANTE ANGEPASST ZUR AUFNAHME EINER MUTTERKLEMME UND EINE MUTTERKLEMME
FASTENING DEVICE COMPRISING A PANEL EDGE ADAPTED FOR RECEIVING A NUT CLAMP AND A NUT CLAMP

(30) Priorité: 15.06.2018 FR 1855290
(43) Date de publication de la demande: 21.04.2021
(73) Titulaire: PSA Automobiles SA, 78300 Poissy (FR); NOVARES France, 92140 Clamart (FR)
(72) Inventeur: LACOSTE, Arnaud, 91460 Marcoussis (FR); CALVET, Alain, 06000 Nice (FR)
(86) Numéro de dépôt international: PCT/FR2019/051303
(87) Numéro de publication internationale: WO 2019/239031

(56) Documents cités:
- CN-A- 104 454 892
- DE-A1-102008 051 326
- FR-A1- 2 697 059
- FR-A1- 2 945 846
- FR-A1- 2 978 512

## Description

La présente invention revendique la priorité de la demande française 1855290 déposée le 15 juin 2018.

### Domaine de l'invention

La présente invention a trait au domaine de l'assemblage de deux panneaux de façon superposée tels qu'un panneau de tôle et un panneau en matière plastique à l'aide d'un dispositif d'assemblage comprenant une pince à écrou en forme de U pourvue d'un fût taraudé et montée sur le bord du panneau en plastique, ainsi qu'une vis d'assemblage pourvue d'une tige filetée s'étendant au travers des deux panneaux et venant se visser dans le fût taraudé.

L'invention concerne en particulier un bord de panneau conformé pour la réception d'une telle pince à écrou.

### Arrière-plan de l'invention

Une pince à écrou, décrite notamment dans la demande de brevet française FR 2 945 846, présente la forme générale d'un U et comprend une première branche, une seconde branche, ainsi qu'une base reliant les deux branches par l'une de leurs extrémités.

La pince comprend également une plaquette réalisée par découpe dans la première branche en étant raccordée à cette dernière à proximité de son extrémité libre opposée à la base.

Cette plaquette est recourbée en direction de la seconde branche de sorte à s'étendre en retrait de la première branche avec son extrémité libre qui rejoint le niveau de la base.

La plaquette porte sur sa face opposée à la seconde branche un fût cylindrique taraudé qui s'étend perpendiculairement à cette plaquette en saillie vers l'extérieur.

La seconde branche présente en outre un trou circulaire qui est axialement aligné avec le fût.

Le bord du panneau destiné à recevoir une telle pince à écrou selon un axe d'engagement comprend une joue prévue pour être chevauchée par cette dernière et étant munie d'un orifice agencé de sorte à se trouver axialement aligné avec ledit fût taraudé et ledit trou après la mise en place de ladite pince à écrou, afin à permettre le passage de la tige de la vis d'assemblage au travers de ce panneau et son vissage sur le fût.

La joue présente une première face et une seconde face prévues pour coopérer par glissement respectivement avec la plaquette et la seconde branche de la pince à écrou lors de sa mise en place.

Ce type de pince à écrou est notamment utilisé de manière courante dans l'assemblage d'équipements intérieurs (tels que par exemple les dispositifs gonflables de sécurité) sur les planches de bords des véhicules automobiles.

Lors de la mise en place chez un sous-traitant de ces pinces écrou sur un ou plusieurs bords de panneaux de la planche de bord du véhicule, il arrive fréquemment que l'opérateur se trompe malencontreusement de sens de sorte que leur fût saille de la mauvaise face du panneau, c'est-à-dire de celle contre laquelle le panneau de l'équipement intérieur doit être rapporté

En fin de ligne finale d'assemblage du véhicule, ce type d'erreur empêche ainsi de réaliser un montage correct du ou des équipements intérieurs concernés sur la planche de bord, ce qui peut engendrer des défauts graves de sécurité.

Afin de repérer les pinces écrou mal positionnées, certains constructeurs automobiles font appel à des systèmes de détection onéreux à base de caméras optiques.

En outre, lorsque des défauts sont constatés, il est nécessaire de reprendre la production ce qui engendre également des coûts supplémentaires.

### Objet et résumé de l'invention

La présente invention vise donc à améliorer cette situation.

Elle propose à cet effet un dispositif de fixation comportant un bord de panneau et une pince à écrou s'engageant sur le bord dudit panneau, le bord du panneau étant conformé pour la réception selon un axe d'engagement de ladite pince à écrou, la pince à écrou étant en forme de U du type comportant une première et une seconde branches reliées par une base, une plaquette réalisée par découpe dans au moins ladite première branche en étant raccordée à cette dernière à proximité de son extrémité libre et portant un fût de vissage taraudé axialement aligné avec un trou ménagé dans ladite seconde branche, ledit bord de panneau comprenant une joue chevauchée par ladite pince à écrou et étant munie d'un orifice agencé de sorte à se trouver axialement aligné avec ledit fût taraudé et ledit trou après la mise en place de ladite pince à écrou, ladite joue présentant une première face et une seconde face prévues pour coopérer par glissement respectivement avec ladite plaquette et ladite seconde branche de la pince à écrou lors de sa mise en place ;
caractérisé en ce que le bord du panneau comporte un premier couple de pilastres latéraux saillant de ladite première face de la joue et s'étendant parallèlement audit axe d'engagement de la pince à écrou en étant écartés l'un de l'autre d'une distance légèrement supérieure à la largeur de ladite plaquette mais inférieure à celle de ladite seconde branche.

Lors de l'engagement dans le sens correct de montage d'une telle pince à écrou sur le bord de panneau selon l'invention, la présence de ces deux pilastres latéraux ne perturbe en rien le glissement de la plaquette le long de la première face de la joue.

A l'inverse, si l'opérateur engage la pince à écrou dans le mauvais sens de montage, l'écartement entre ces deux pilastres est insuffisant pour permettre à la seconde branche de cette pince à écrou de glisser entre ces derniers le long de la première face de la joue.

Ces deux pilastres forment ainsi des moyens de détrompage pour l'opérateur permettant de réduire très sensiblement les risques d'erreur de montage d'une telle pince à écrou sur le bord du panneau.

Selon des caractéristiques préférées dudit bord de panneau, prises seules ou en combinaison :
- le sommet de chaque pilastre est constitué par une rampe inclinée formant un angle aigu avec ledit axe d'engagement de la pince à écrou ;
- ledit angle aigu est compris entre 10 et 70° ;
- ledit angle aigu est compris entre 30 et 45° ;
- ledit bord de panneau comporte un second couple de pilastres latéraux saillant de ladite seconde face de la joue et s'étendant parallèlement audit axe d'engagement de la pince à écrou en étant écartés l'un de l'autre d'une distance légèrement supérieure à la largeur de ladite seconde branche de cette pince à écrou ;
- les coins supérieurs internes desdits seconds pilastres sont chanfreinés de sorte à définir une zone supérieure d'entrée évasée pour ladite seconde branche de la pince à écrou ;
- la partie inférieure de ladite joue présente une épaisseur constante supérieure à l'écartement au repos entre la plaquette et la seconde branche de la pince à écrou ;
- la partie supérieure de ladite joue s'affine de manière régulière jusqu'à son extrémité supérieure libre ; et/ou
- l'extrémité supérieure libre de ladite joue présente une échancrure destinée à recevoir une patte ménagée en partie supérieure de ladite plaquette de la pince à écrou de sorte à éviter que ladite patte ne vienne en butée contre l'extrémité supérieure de ladite joue lors de la mise en place de la pince à écrou ;

L'invention vise également sous un deuxième aspect, une planche de bord de véhicule automobile comportant un tel dispositif de fixation.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- les figures 1 et 2 représentent des vues en perspective respectivement de trois quart face et de trois quart dos d'une pince à écrou ;
- les figures 3 et 4 sont des vues en perspective respectivement de trois quart face et de trois quart dos d'un bord de panneau selon l'invention destiné à recevoir une pince à écrou telle que celle illustrée sur les figures 1 et 2 ;
- les figures 5 et 6 représentent des vues en élévation respectivement de face et de dos du bord de panneau des figures 3 et 4 sur lequel est montée la pince à écrou des figures 1 et 2 ;
- la figure 7 est une vue en coupe transversale de l'ensemble des figures 5 et 6, prise selon le plan VII-VII repérés sur ces figures ; et
- la figure 8 représente une vue en coupe transversale prise selon le même plan de coupe que la figure 7 et illustrant une tentative de montage dans le mauvais sens de la pince à écrou des figures 1 et 2 sur le bord du panneau des figures 3 et 4.

### Description détaillée d'un mode préféré de réalisation

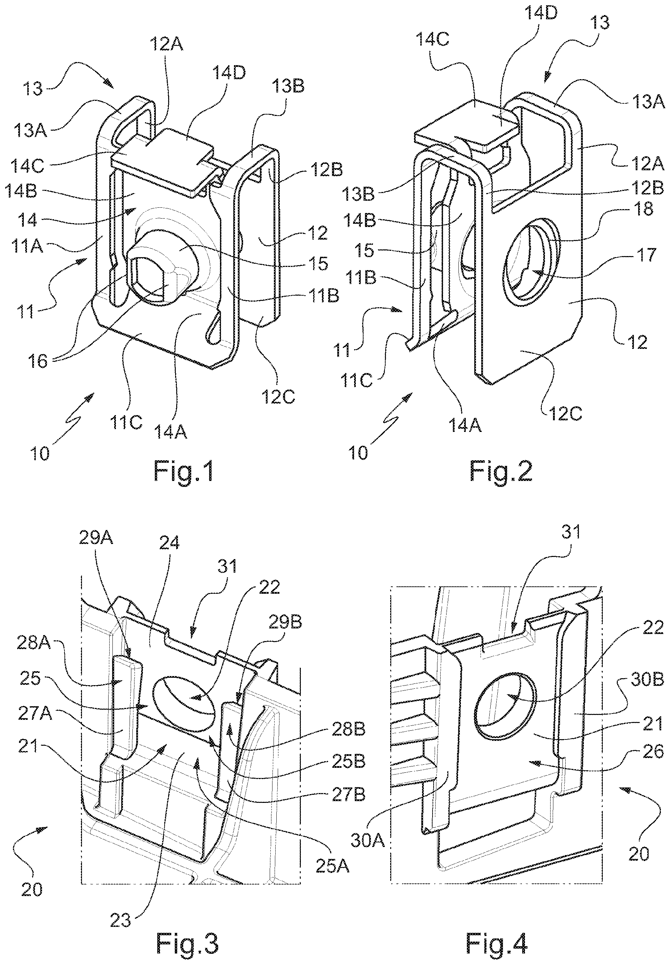

Réalisée à partir d'une feuille de tôle découpée et pliée, la pince à écrou 10 illustrée sur les figures 1 et 2 se présente sous la forme générale d'un U, et comprend une première branche 11, une seconde branche 12, et une base 13 reliant les deux branches 12, 13 par l'une de leurs extrémités.

La pince à écrou 10 comprend également une plaquette 14 obtenue par découpe dans la première branche 11, dans la base 13 et dans la partie supérieure de la seconde branche 12,

Cette découpe pratiquée dans la pince à écrou 10 définit ainsi deux bras latéraux 11A, 11B dans la première branche 11 entre lesquels s'étend la plaquette 14, ces deux bras 11A, 11B se prolongeant par deux anses latérales 13A, 13B dans la base 13 et par deux autres bras latéraux de plus petite longueur 12A, 12B dans la seconde branche 12.

La plaquette 14 comprend une portion de liaison 14A par laquelle elle est raccordée à la première branche 11 à proximité de son extrémité libre 11C opposée à la base 13, et qui s'incline en direction de la seconde branche 12.

Cette plaquette 14 comprend également une portion principale 14B s'étendant parallèlement en retrait de cette première branche 11 avec son extrémité libre qui rejoint le niveau de la base 13, ainsi qu'un retour d'équerre 14C s'étendant en direction opposée à la seconde branche 12 et faisant saillie au-delà du plan de la première branche 11.

Ce retour d'équerre 14C forme une surface d'appui permettant de faciliter l'enfoncement de la pince à écrou 10 sur le bord du panneau plastique.

La plaquette 14 comprend également une patte rectangulaire 14D obtenue par découpe dans la portion principale 14B et s'étendant coplanairement dans le prolongement du retour d'équerre 14C en direction de la seconde branche 12.

La portion principale 14B de la plaquette 14 porte sur sa face opposée à la seconde branche 12 un fût cylindrique taraudé 15 qui s'étend perpendiculairement à cette plaquette 14 en saillie vers l'extérieur.

Ce fût cylindrique taraudé 15 comprend à son extrémité libre des moyens de freinage de la vis d'assemblage, constitués en l'espèce par deux déformations 16 diamétralement opposées et s'étendant en biseau en direction de son axe de sorte à donner à cette extrémité libre une forme sensiblement ovale.

La seconde branche 12 de la pince à écrou 10 présente un trou circulaire 17 qui est axialement aligné avec le fût 15, ainsi qu'une patte circulaire 18 découpée dans celle-ci autour du trou 17 et s'inclinant vers l'intérieur en direction de la plaquette 14.

Afin de faciliter son montage sur le bord d'un panneau, l'extrémité libre 11C de la première branche 11 est recourbée dans la direction opposée à l'extrémité libre 12C de la seconde branche 12 de sorte à former un becquet d'entrée pour l'engagement du bord du panneau.

En l'espèce et comme cela est bien visible sur la figure 1, cette extrémité libre 11C de la première branche 11 s'étend coplanairement avec la portion de liaison 14A de la plaquette 14.

Une fois engagée sur un bord du panneau, ledit bord de panneau chevauchée par la pince à écrou 10 définissent un dispositif de fixation.

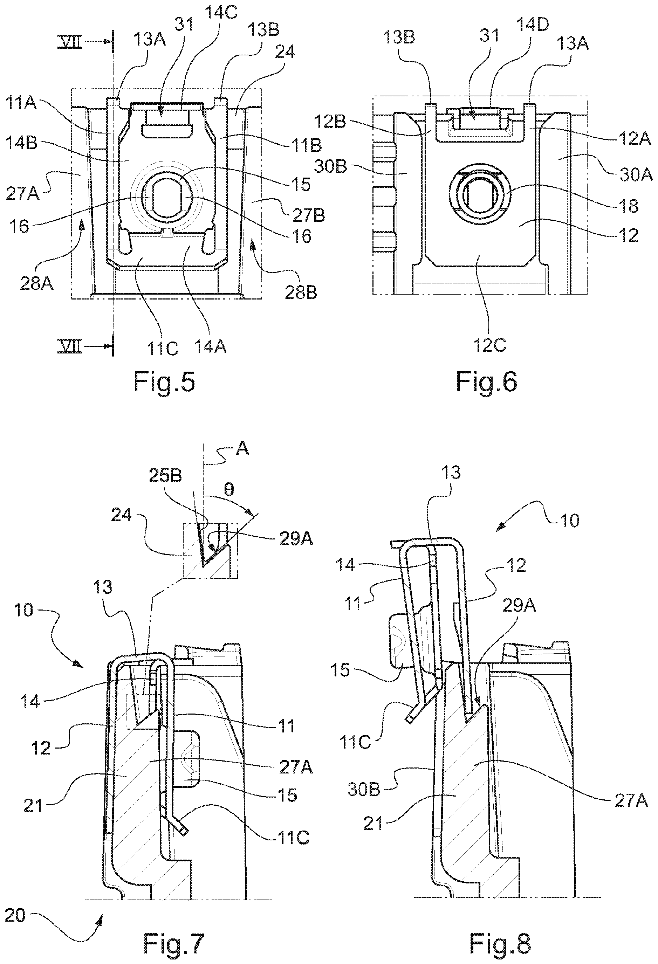

On va maintenant décrire à l'appui des figures 3 et 4, le bord de panneau 20 selon l'invention conformé pour recevoir selon un axe d'engagement A (voir figure 7) la pince à écrou du type de celle 10 décrite ci-avant.

Dans la suite et par convention, les termes « supérieur » et « inférieur » seront utilisés pour décrire un élément visible respectivement en haut et en bas sur ces figures

Le bord de panneau 20 appartient ici à un panneau de planche de bord de véhicule automobile venu de moulage à partir d'un matériau thermoplastique éventuellement chargé en fibres naturelles et/ou synthétiques.

Ce bord de panneau 20 comporte une joue 21 prévue pour être chevauchée par la pince à écrou 10 lors de son montage tel qu'illustré sur les figures 5 à 8.

La joue 21 est munie d'un orifice circulaire 22 agencé de sorte à se trouver axialement aligné avec le fût taraudé 15 et le trou 17 après la mise en place de ladite pince à écrou 10.

Cet orifice 22 présente un diamètre légèrement supérieur à celui de la patte circulaire 18 découpée dans la seconde branche 12 de la pince à écrou 10 afin que l'extrémité supérieure de cette patte 18 pénètre dans cet orifice 22 lorsque la pince à écrou 10 vient occuper sa configuration montée, de sorte à constituer ainsi une butée coopérant avec la tranche supérieure de cet orifice 22 pour empêcher tout retrait accidentel de cette pince à écrou 10.

La partie inférieure 23 de la joue 21 s'étendant en dessous de l'orifice 22 présente une épaisseur constante supérieure à l'écartement au repos entre la plaquette 14 et la seconde branche 12 de la pince à écrou 10.

La partie supérieure 24 de cette joue 21 s'affine quant à elle de manière régulière jusqu'à son extrémité libre supérieure afin d'obtenir un écartement progressif entre la plaquette 14 et la seconde branche 12 de la pince à écrou 10 lors de la mise en place de cette dernière, de sorte à minimiser le niveau d'effort à exercer par l'opérateur.

Plus précisément, la première face 25 de la joue 21 prévue pour coopérer par glissement avec la plaquette 14 de la pince à écrou 10 lors de sa mise en place comprend une surface inférieure 25A s'étendant sur la hauteur de la partie inférieure 23 parallèlement à l'axe d'engagement A de la pince à écrou 10, ainsi qu'une surface supérieure 25B s'étendant sur la hauteur de la partie supérieure 24 selon un pan incliné par rapport à l'axe d'engagement A de cette pince à écrou 10.

La seconde face 26 de la joue 21 prévue pour coopérer par glissement avec la seconde branche 12 de la pince à écrou 10 lors de sa mise en place est constituée quant à elle par une surface plane unique s'étendant parallèlement à la surface inférieure 25A de la première face 25 et à l'axe d'engagement A de cette pince à écrou 10.

Tel qu'illustré sur la figure 3, le bord de panneau 20 comporte un premier couple de pilastres latéraux parallèles 27A, 27B saillant de la première face 25 de la joue 21 de manière symétrique par rapport à son plan transversal médian, et s'étendant chacun parallèlement à l'axe d'engagement A de la pince à écrou 10 depuis l'extrémité inférieure de cette joue 21 jusqu'à un niveau situé légèrement au dessus de l'orifice 22.

Ces deux pilastres 27A, 27B sont en outre écartés l'un de l'autre d'une distance légèrement supérieure à la largeur de la plaquette 14 de la pince à écrou 10 de sorte à permettre à cette plaquette 14 de glisser entre ces derniers le long de la première face 25 de la joue 21 (voir figure 5), mais inférieure à celle de la seconde branche 12 de la pince à écrou 10 de sorte à empêcher cette branche 12 de glisser entre ces derniers le long de la première face 25 de la joue 21 dans le cas où cette pince à écrou 10 serait engagée à l'envers par rapport à son sens de montage.

Chaque pilastre 27A, 27B présente chacun une surface extérieure respective 28A, 28B s'étendant parallèlement au plan moyen de la joue 21 et à sa seconde face 26, et étant prévue pour coopérer par glissement successivement avec l'extrémité libre recourbée 11C et avec un bras latéral correspondant 11A, 11B de la première branche 11 de la pince à écrou 10 lors de sa mise en place.

Le sommet 29A, 29B de chaque pilastre 27A, 27B est constitué par une rampe inclinée formant un angle aigu θ avec le plan moyen de la joue 21 et l'axe d'engagement A de la pince à écrou 10 (c'est-à-dire suivant une pente s'inclinant selon le sens d'engagement de cette pince à écrou 10 entre sa surface extérieure 28A, 28B et la première face 25 de la joue 21), de sorte à empêcher la seconde branche 12 de cette pince à écrou 10 de glisser sur ces surfaces extérieures 28A, 28B des pilastres 27A, 27B en s'écartant de la plaquette 14 dans le cas où cette pince à écrou 10 serait engagée à force par l'opérateur dans le mauvais sens.

En effet, dans cette éventualité et tel qu'illustré par la figure 8, l'extrémité libre 12C de cette seconde branche 12 de la pince à écrou 10 viendrait glisser sur ces sommets inclinés 29A, 29B des pilastres 27A, 27B jusqu'à vernir buter contre la première face 25 de la joue 21 de sorte à empêcher l'opérateur de poursuivre l'engagement de la pince à écrou 10 jusqu'au bout.

L'angle aigu θ entre chaque sommet 29A, 29B et le plan moyen de la joue 21 est compris avantageusement entre 10 et 70°, et de manière encore plus préférentielle entre 30 et 45°.

Tel qu'illustré sur la figure 4, le bord de panneau 20 comporte également un second couple de pilastres latéraux parallèles 30A, 30B saillant de la seconde face 26 de la joue 21 de manière symétrique par rapport à son plan transversal médian, et s'étendant chacun parallèlement à l'axe d'engagement A de la pince à écrou 10 depuis l'extrémité inférieure de cette joue 21 jusqu'à son extrémité supérieure libre.

Ces deux pilastres 30A, 30B sont en outre écartés l'un de l'autre d'une distance légèrement supérieure à la largeur de la seconde branche 12 de la pince à écrou 10, de sorte à assurer lors de la mise en place de la pince à écrou 10 le guidage à coulissement de cette branche 12 le long de la seconde face 26 de la joue 21.

La présence de ces deux pilastres 30A, 30B permet également d'assurer, après son montage, le maintien latéral de la pince à écrou 10 et d'éviter que celle-ci ne puisse pivoter sur elle-même autour d'un axe transversal au plan moyen de la joue 21 (voir figure 6).

En outre, les coins supérieurs internes de ces seconds pilastres 30A, 30B sont chanfreinés de sorte à définir une zone supérieure d'entrée évasée facilitant l'introduction de la seconde branche 12 de la pince à écrou 10 entre ces derniers.

On notera enfin que l'extrémité supérieure libre de la joue 21 présente une échancrure rectangulaire 31 centrée par rapport à son plan transversal médian et destinée à recevoir la patte rectangulaire 14D de la plaquette 14 de sorte à éviter que cette patte 14D n'empêche, en venant préalablement en butée contre cette extrémité supérieure de la joue 21, d'engager complètement la pince à écrou 10 jusqu'à sa configuration montée où ses anses latérales 13A, 13B viennent reposer contre cette extrémité supérieure de la joue 21 (voir figures 5 et 6).

Selon des variantes de réalisation non représentées, la joue du bord de panneau est conformée différemment. Celle-ci est par exemple dépourvue d'une échancrure telle que 31 et/ou son épaisseur demeure constante sur toute sa hauteur.

Selon d'autres variantes de réalisation non représentées, le bord est dépourvu d'un second couple de pilastres latéraux saillant de la seconde face de la joue.

D'une manière générale, on rappelle que la présente invention ne se limite pas aux formes de réalisation décrites et représentées, mais qu'elle englobe toute variante d'exécution à la portée de l'homme du métier.

## Revendications

1. Dispositif de fixation comportant un bord de panneau et une pince à écrou (10) s'engageant sur le bord dudit panneau, le bord de panneau étant conformé pour la réception selon un axe d'engagement (A) de ladite pince à écrou (10) la pince à écrou étant en forme de U du type comportant une première et une seconde branches (11, 12) reliées par une base (13), une plaquette (14) réalisée par découpe dans au moins ladite première branche (11) en étant raccordée à cette dernière à proximité de son extrémité libre (11A) et portant un fût de vissage taraudé (15) axialement aligné avec un trou (17) ménagé dans ladite seconde branche (12),
ledit bord de panneau comprenant une joue (21) chevauchée par ladite pince à écrou (10) et étant munie d'un orifice (22) agencé de sorte à se trouver axialement aligné avec ledit fût taraudé (15) et ledit trou (17) après la mise en place de la pince à écrou (10), ladite joue (21) présentant une première face (25) et une seconde face (26) prévues pour coopérer par glissement respectivement avec ladite plaquette (14) et ladite seconde branche (12) de la pince à écrou (10) lors de sa mise en place ;
**caractérisé en ce que** le bord du panneau comporte un premier couple de pilastres latéraux (27A, 27B) saillant de ladite première face (25) de la joue (21) et s'étendant parallèlement audit axe d'engagement (A) de la pince à écrou (10) en étant écartés l'un de l'autre d'une distance légèrement supérieure à la largeur de ladite plaquette (14) mais inférieure à celle de ladite seconde branche (12).

2. Dispositif de fixation selon la revendication 1, **caractérisé en ce que** le sommet (29A, 29B) de chaque pilastre (27A, 27B) est constitué par une rampe inclinée formant un angle aigu (θ) avec ledit axe d'engagement (A) de la pince à écrou (10).

3. Dispositif de fixation selon la revendication 2, **caractérisé en ce que** ledit angle aigu (θ) est compris entre 10 et 70°.

4. Dispositif de fixation selon la revendication 3, **caractérisé en ce que** ledit angle aigu (θ) est compris entre 30 et 45°.

5. Dispositif de fixation selon l'une des revendications 1 à 4, **caractérisé en ce qu'**il comporte un second couple de pilastres latéraux (30A, 30B) saillant de ladite seconde face (26) de la joue (21) et s'étendant parallèlement audit axe d'engagement (A) de la pince à écrou (10) en étant écartés l'un de l'autre d'une distance légèrement supérieure à la largeur de ladite seconde branche (12) de cette pince à écrou (10).

6. Dispositif de fixation selon la revendication 5, **caractérisé en ce que** les coins supérieurs internes desdits seconds pilastres (30A, 30B) sont chanfreinés de sorte à définir une zone supérieure d'entrée évasée pour ladite seconde branche (12) de la pince à écrou (10).

7. Dispositif de fixation selon l'une des revendications 1 à 6, **caractérisé en ce que** la partie inférieure (23) de ladite joue (21) présente une épaisseur constante supérieure à l'écartement au repos entre la plaquette (14) et la seconde branche (12) de la pince à écrou (10).

8. Dispositif de fixation selon l'une des revendications 1 à 7, **caractérisé en ce que** la partie supérieure (24) de ladite joue (21) s'affine de manière régulière jusqu'à son extrémité supérieure libre.

9. Dispositif de fixation selon l'une des revendications 1 à 8, **caractérisé en ce que** l'extrémité supérieure libre de ladite joue (21) présente une échancrure (31) destinée à recevoir une patte (14D) ménagée en partie supérieure de ladite plaquette (14) de la pince à écrou (10) de sorte à éviter que ladite patte (14D) ne vienne en butée contre l'extrémité supérieure de ladite joue (21) lors de la mise en place de la pince à écrou (10).

10. Planche de bord de véhicule automobile comportant dispositif de fixation selon l'une des revendications 1 à 9.

## Patentansprüche

1. Befestigungsvorrichtung mit einer Plattenkante und einer Mutterklammer (10), die in den Rand der Platte eingreift, wobei die Plattenkante zur Aufnahme in einer Eingriffsachse (A) der Mutterklammer (10) ausgebildet ist
Die Gewindespindel ist U-förmig mit einem ersten und einem zweiten Schenkel (11, 12), die durch eine Basis (13) verbunden sind, wobei eine Platte (14) durch Schneiden in mindestens dem ersten Schenkel (11) mit diesem in der Nähe ihres freien Endes (11A) verbunden ist und einen axial mit einer Gewindespindel (15) fluchtenden Schraubstift trägt Loch (17) in dem zweiten Schenkel (12),
Der Plattenrand umfasst eine Wange (21), die von der Mutterklammer (10) überlappt ist und mit einer Öffnung (22) versehen ist, die so angeordnet ist, dass sie axial mit dem Gewindeschaft (15) und der Bohrung (17) nach dem Einsetzen der Mutterklammer (10) ausgerichtet ist, wobei die Wange (21) eine erste Fläche (25) und eine zweite Fläche aufweist Fläche (26), die zum gleitenden Zusammenwirken mit der Platte (14) bzw. dem zweiten Schenkel (12) der Mutter-Zange (10) beim Einsetzen vorgesehen ist;
**Dadurch gekennzeichnet, dass** der Rand der Platte ein erstes Paar seitlicher Pfosten (27A, 27B) aufweist, das von der ersten Fläche (25) der Wange (21) vorsteht und sich parallel zu der Eingriffsachse (A) der Nabenklammer (10) erstreckt, indem es um einen Abstand voneinander beabstandet ist, der geringfügig größer ist als die Breite der Platte (1) 4), jedoch kleiner als der zweite Schenkel (12).

2. Befestigungsvorrichtung nach Anspruch 1, **dadurch gekennzeichnet, dass** der Scheitel (29A, 29B) jedes Pfahls (27A, 27B) durch eine geneigte Rampe gebildet ist, die einen spitzen Winkel (θ) mit der Eingriffsachse (A) der Mutterzange (10) bildet.

3. Befestigungsvorrichtung nach Anspruch 2, **dadurch gekennzeichnet, dass** der spitze Winkel (θ) zwischen 10 und 70° liegt.

4. Befestigungsvorrichtung nach Anspruch 3, **dadurch gekennzeichnet, dass** der spitze Winkel (θ) zwischen 30 und 45° liegt.

5. Befestigungsvorrichtung nach einem der Ansprüche 1 bis 4, **dadurch gekennzeichnet, dass** sie ein zweites Paar seitlicher Pfosten (30A, 30B) aufweist, das von der zweiten Seite (26) der Wange (21) vorsteht und sich parallel zu der Eingriffsachse (A) der Mutterzange (10) erstreckt, wobei es voneinander beabstandet ist einen Abstand, der geringfügig größer ist als die Breite des zweiten Schenkels (12) der Mutterzange (10).

6. Befestigungsvorrichtung nach Anspruch 5, **dadurch gekennzeichnet, dass** die inneren oberen Ecken der zweiten Schenkel (30A, 30B) abgeschrägt sind, um einen sich vergrößernden oberen Eintrittsbereich für den zweiten Schenkel (12) der Mutterklemme (10) zu definieren.

7. Befestigungsvorrichtung nach einem der Ansprüche 1 bis 6, **dadurch gekennzeichnet, dass** der untere Teil (23) der Wange (21) eine konstante Dicke aufweist, die größer ist als der Abstand im Ruhezustand zwischen dem Plättchen (14) und dem zweiten Schenkel (12) der Mutterzange (10).

8. Befestigungsvorrichtung nach einem der Ansprüche 1 bis 7, **dadurch gekennzeichnet, dass** der obere Teil (24) der Wange (21) bis zu ihrem freien oberen Ende gleichmäßig bündig verläuft.

9. Befestigungsvorrichtung nach einem der Ansprüche 1 bis 8, **dadurch gekennzeichnet, dass** das freie obere Ende der Wange (21) eine Aussparung (31) zur Aufnahme einer Lasche (14D) aufweist, die im oberen Teil der Platte (14) der Mutterzange (10) vorgesehen ist, um zu verhindern, dass die Lasche (14D) an das obere Ende anstößt der Wange (21) beim Einsetzen der Mutterzange (10).

10. Armaturenbrett für Kraftfahrzeuge mit einer Befestigungsvorrichtung nach einem der Ansprüche 1 bis 9.

## Claims

1. Fixing device having a panel edge and nut clamp (10) engaging on the edge of the panel, the panel edge being conformed for approval on an axis of commitment (A) of the nut clamp (10)
with a U-shaped nut clip of the type having a first and a second branch (11, 12) connected by a base (13), a platelet (14) made by cutting in at least that first branch (11) connected to that branch near its free end (11A) and bearing a threaded screw drum (15) axial aligned e with a hole (17) housed in that second branch (12),
the panel edge comprising a cheek (21) straddled by the said nut clip (10) and having an opening (22) arranged so as to be axially aligned with the said tarauded drum (15) and the said hole (17) after the nut clip (10) has been installed, the said cheek (21) having a first face (10) 25) and a second face (26) intended to co-slide with the said platelet (14) and the second branch (12) of the nut clip (10) respectively when it is installed;
characterized that the edge of the panel has an initial torque of lateral pilasters (27A, 27B) protruding from the first face (25) of the cheek (21) and extending parallel to the axis of commitment (A) of the nut clamp (10) by being separated from each other by a distance slightly greater than the width of the platelet (10) 4) but less than that of that second branch (12).

2. A fixation device according to Claim 1, **characterized by** the fact that the top (29A, 29B) of each pilot (27A, 27B) consists of an inclined ramp forming an acute angle (sic) with the said axis of engagement (A) of the nut clamp (10).

3. Fixing device according to Claim 2, characterized as the said acute angle () is between 10 and 70°.

4. Fixing device according to Claim 3, characterized as the said acute angle (the "high angle") is between 30 and 45°.

5. Fixing device according to one of the claims 1 to 4, characterized as it contains a second pair of lateral pilasters (30A, 30B) protruding from the second face (26) of the cheek (21) and extending parallel to the axis of engagement (A) of the nut clamp (10) by being slightly separated from each other by a distance greater than the width of that second branch (12) of that nut clip (10).

6. Fixing device according to Claim 5, **characterized in that** the inner upper corners of the second pilasters (30A, 30B) are chamfered so as to define an upper area of flared entry for that second branch (12) of the nut clamp (10).

7. Fixing device according to one of the claims 1 to 6, characterized as the lower part (23) of the cheek (21) has a constant thickness greater than the rest gap between the platelet (14) and the second branch (12) of the nut clip (10).

8. Fixing device according to one of the claims 1 to 7, characterized as the upper part (24) of the said cheek (21) is regularly refined to its free upper end.

9. Fixing device according to one of the claims 1 to 8, characterized that the upper free end of the cheek (21) has a swing (31) intended to receive a leg (14D) housed at the upper end of the said platelet (14) of the nut clip (10) so as to prevent that leg (14D) from coming in stop against the upper end of said cheek (21) when placing the nut clip (10).

10. Board of the motor vehicle with fastening device according to one of the claims 1 to 9.
